(19) Europäisches Patentamt
European Patent Office
Office européen des brevets

(11) EP 0 677 551 B1

(12) # EUROPÄISCHE PATENTSCHRIFT

(45) Veröffentlichungstag und Bekanntmachung des Hinweises auf die Patenterteilung:
**25.08.1999 Patentblatt 1999/34**

(51) Int Cl.[6]: **C08K 13/02**, C08L 27/06
// (C08K13/02, 3:24, 5:15)

(21) Anmeldenummer: **95810228.7**

(22) Anmeldetag: **06.04.1995**

(54) **Stabilisiertes Weich-PVC**

Stabilised soft PVC

PCV stabilisé souple

(84) Benannte Vertragsstaaten:
**AT BE CH DE DK ES FR GB IT LI NL PT SE**

(30) Priorität: **15.04.1994 CH 114094**

(43) Veröffentlichungstag der Anmeldung:
**18.10.1995 Patentblatt 1995/42**

(73) Patentinhaber: **Witco Vinyl Additives GmbH
68623 Lampertheim (DE)**

(72) Erfinder:
- **Drewes, Rolf, Dr.
D-64678 Lindenfels (DE)**
- **Kolb, Markus
D-68723 Plankstadt (DE)**
- **Kuhn, Karl Josef, Dr.
D-64686 Lautertal (DE)**
- **Sander, Hans-Jürgen
D-64653 Lorsch (DE)**
- **Wehner, Wolfgang, Dr.
D-64372 Ober-Ramstadt (DE)**

(56) Entgegenhaltungen:
**EP-A- 0 522 810** **EP-A- 0 625 546**
**EP-A- 0 668 316**

- **PATENT ABSTRACTS OF JAPAN vol. 016 no. 406 (C-0978) ,27.August 1992 & JP-A-04 136054 (ASAHI DENKA KOGYO KK) 11.Mai 1992,**
- **DATABASE WPI Section Ch, Week 9347 Derwent Publications Ltd., London, GB; Class A14, AN 93-374696 & JP-A-05 279 533 ( SEKISUI CHEM IND CO LTD) , 26.Oktober 1993**
- **PATENT ABSTRACTS OF JAPAN vol. 013 no. 595 (C-672) ,27.Dezember 1989 & JP-A-01 252649 (KATSUTA KAKO KK) 9.Oktober 1989,**
- **DATABASE WPI, Woche 9127, Derwent Publications Ltd., London, GB, AN 91-197248, Klasse A14, ADEKA-ARGUS CHEM CO. LTD. "Vinyl chloride-based resin composition", 24.05.91**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 677 551 B1

Printed by Jouve, 75001 PARIS (FR)

## Beschreibung

Die Erfindung betrifft durch Epoxidverbindungen und Perchlorate stabilisiertes Weich-PVC (Polyvinylchlorid), ein Verfahren zu seiner Herstellung und seine Verwendung.

PVC kann durch eine Reihe von Zusatzstoffen stabilisiert werden. Schwermetallverbindungen von Blei und Cadmium sind dafür besonders gut geeignet, sind aber heute aus ökologischen Gründen wegen des Schwermetallgehalts umstritten. (vgl. "Plastics Additives", Herausgeber R. Gächter und H. Müller, Hanser Verlag, München, Wien, New York, 3. Auflage, 1990, Seiten 287-295 und Kunststoff Handbuch PVC, Band 1 und 2, Beck/Braun, Carl Hanser Verlag, München).

Man sucht daher weiter nach wirksamen Stabilisatoren und Stabilisatorkombinationen.

Epoxidverbindungen sind als Costabilisatoren für PVC schon seit langem bekannt. Man verwendet häufig epoxidiertes Sojabohnenöl (vgl. beispielsweise "Plastics Additives", Herausgeber R. Gächter und H. Müller, Hanser Verlag, 3. Auflage, 1990, Seiten 303/4 und US 3,928,267). Für chloriertes Polyvinylchlorid wird auch der Einsatz von Glycidylethern von Novolakharzen als Stabilisator beschrieben, beispielsweise in der DE 34 02 408.

In der japanischen Offenlegungsschrift JP Hei 3-122149 wird eine Hart-PVC-Zusammensetzung vorgeschlagen, die feste Epoxide und Perchlorate enthält.

Es wurde nun gefunden, daß mit einer Mischung aus einem Perchlorat und einem endständigen Epoxid stabilisiertes Weich-PVC eine hervorragende thermische Stabilität bei guter Anfangsfarbe und Farbhaltung aufweist. Überraschenderweise genügt das erfindungsgemäß stabilisierte Weich-PVC den hohen Anforderungen, die z.B. von mit Barium/Zink-Verbindungen stabilisiertem PVC erfüllt werden. Besonders hervorzuheben ist, daß ausgezeichnete Lagerstabilität und Lichtstabilität erzielt werden. Ferner erreicht man unabhängig vom Aggregatzustand des Epoxids eine gute Stabilisierung, d.h. es können auch flüssige endständige Epoxide ohne Nachteil eingesetzt werden.

Die Erfindung betrifft daher eine Zusammensetzung enthaltend

(a) Weich-PVC,

Gegenstand der Erfindung ist eine Zusammensetzung enthaltend

(a) Weich-PVC,

(b) 0,001-5,0 Teile je 100 Teile PVC Perchlorat der Formel $M(ClO_4)_n$, wobei M H, $NH_4$, Na, K, Mg, Ca, Ba oder Al und n 1, 2 oder 3 je nachWertigkeit von M ist,

(c) 0,1-5,0 Teile je 100 Teile PVC einer Epoxidverbindung enthaltend einen endständigen Epoxidrest der Formel I

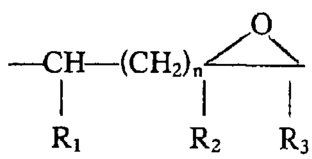

(I),

wobei

$R_1$ und $R_3$ Wasserstoff sind,
$R_2$ Wasserstoff oder Methyl und n gleich 0 ist, oder
$R_1$ und $R_3$ zusammen $-CH_2-CH_2-$ oder $-CH_2-CH_2-CH_2-$ und $R_2$ Wasserstoff sind und n 0 oder 1 ist und das Epoxidradikal direkt an ein Kohlenstoff- Sauerstoff-, Stickstoff- oder Schwefelatom gebunden ist.

Ein weiterer Gegenstand der Erfindung sind Zusammensetzungen enthaltend als Komponente (c) eine Epoxidverbindung mit einer aromatischen Gruppe, insbesondere ein Bisphenolderivat.

Ein weiterer Gegenstand der Erfindung sind Zusammensetzungen enthaltend zusätzlich Stoffe ausgewählt aus der Gruppe der Füllstoffe und Verstärkungsmittel, Antioxidantien, Polyole, Zeolithe, Hydrotalcite, Dawsomite, organischen Phosphite, 1,3-Diketoverbindungen, Dihydropyridine, sterisch gehinderten Amine (HALS), Lichtschutzmittel, UV-Absorber, Gleitmittel, Fettsäureester, Paraffine, optischen Aufheller, Pigmente, Flammschutzmittel, Antistatika, β-Aminocrotonate, Pyrrole, β-Naphthole, Hydroxydiphenylamine, Phenylindole, Phosphate, Thiophosphate, Gelierhilfen, peroxidzerstörenden Verbindungen, Modifikatoren und weiteren Komplexbildner für Lewis-Säuren.

Ein weiterer Gegenstand der Erfindung sind Zusammensetzungen enthaltend zusätzlich mindestens ein Additiv aus der Gruppe der Disaccharidalkohole, organischen Phosphite, Zeolithe, Hydrotalcite, Dawsomite, Aminocrotonate, Polyole, Diketone, Pyrrole, β-Naphthole oder Dihydropyridine.

Ein weiterer Gegenstand der Erfindung ist ein Verfahren zur Herstellung von stabilisiertem Weich-PVC, welches dadurch gekennzeichnet ist, daß man unter Verwendung von Vorrichtungen, wie Kalander, Mischer, Kneter, Extruder und dergleichen, die Komponenten (b) und (c) gemäß Anspruch 1 und gegebenenfalls weitere Zusätze mit dem PVC vermischt.

Weitere Gegenstände werden durch die Ansprüche gekennzeichnet.

Die Zusammensetzung enthält vorzugsweise keine Blei- oder Cadmiumverbindungen.

Im Rahmen dieser Erfindung bedeutet Weich PVC:
PVC Mischungen, die einen zur Erlangung der Weich-PVC-Eigenschaften ausreichenden Anteil mindestens eines Weichmachers enthalten.

PVC mit einer Einfriertremperatur von mehr als 70°C gilt im Rahmen dieser Erfindung nicht als Weich-PVC.

Weich-PVC wird ferner dadurch definiert, daß es aufgrund seines Weichmachergehaltes zur Herstellung von Weich-PVC-Artikeln geeignet ist. Dazu zählen z.B. Kabel- und Drahtummantelungen, Dachfolien, Dekorationsfolien, Schaumstoffe, Agrarfolien, Bürofolien, Kraftfahrzeug-Folien (auch Polyurethan-hinterschäumte) Schläuche, Dichtungsprofile und dergleichen mehr.

Geeignet als Komponente (a) für die erfindungsgemäßen Zusammensetzungen sind auch Blends, Copolymerisate oder Pfropfpolymerisate von PVC mit polymerisierbaren Verbindungen wie Acrylnitril, Vinylacetat oder (Co) Polymerisaten wie ABS, wobei es sich um Suspensions-, Masse- oder Emulsionspolymerisate und deren Abmischungen handeln kann. Beispiele für solche Komponenten (a) sind Zusammensetzungen aus (i) 20-80 Gew.-Teilen eines Vinylchlorid-Homopolymeren (PVC) und (ii) 80-20 Gew.-Teile mindestens eines thermoplastischen Copolymerisats auf der Basis von Styrol und Acrylnitril, insbesondere aus der Gruppe ABS, NBR, NAR, SAN und EVA. Die verwendeten Abkürzungen für die Copolymerisate sind dem Fachmann geläufig und bedeuten folgendes: ABS: Acrylnitril-Butadien-Styrol; SAN: Styrol-Acrylnitril; NBR: Acrylnitrit-Butadien; NAR: Acrylnitril-Acrylat; EVA: Ethylen-Vinylacetat. Es kommen insbesondere auch Styrol-Acrylnitril-Copolymerisate auf Acrylat-Basis (ASA) in Betracht. Bevorzugt als Komponente (a) sind in diesem Zusammenhang Polymerzusammensetzungen, die als Komponenten (i) und (ii) eine Mischung aus 25-75 Gew.-% PVC und 75-25 Gew.-% der genannten Copolymerisate enthalten. Beispiele für solche Zusammensetzungen sind: 25-50 Gew.-% PVC und 75-50 Gew.-% Copolymerisate bzw. 40-75 Gew.-% PVC und 60-25 Gew.-% Copolymerisate. Bevorzugte Copolymerisate sind ABS, SAN und modifiziertes EVA, insbesondere ABS. Besonders geeignet sind auch NBR, NAR und EVA. In der erfindungsgemäßen Zusammensetzung können eines oder mehrere der genannten Copolymerisate vorhanden sein. Von besonderer Bedeutung sind als Komponente (a) Zusammensetzungen, die (i) 100 Gewichtsteile PVC, und (ii) 0-300 Gewichtsteile ABS und/oder mit SAN modifiziertes ABS und 0-80 Gewichtsteile der Copolymeren NBR, NAR und/oder EVA, insbesondere jedoch EVA, sowie auf 100 Gewichtsteile (i) und (ii) 5-120 Gewichtsteile Weichmacher, insbesondere Phthalsäureester wie DOP, DINP, DIDP und/oder Trimellithsäureester wie TOTM, TIDTM, TITDTM [Vgl. weiter unten unter A) und C)], enthalten.

<u>Geeignete Weichmacher</u>

Als organische Weichmacher kommen beispielsweise solche aus den folgenden Gruppen in Betracht:

A) Phthalate (Phthalsäureester)
Beispiele für solche Weichmacher sind Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Di-iso-tridecyl-, Dicyclohexyl-, Di-methylcyclohexyl-, Dimethylglycol-, Dibutylglycol-, Benzylbutyl- und Diphenyl-phthalat sowie Mischungen von Phthalaten wie $C_7$-$C_9$- und $C_9$-$C_{11}$-Alkylphthalate aus überwiegend linearen Alkoholen, $C_6$-$C_{10}$-n-Alkylphthalate und $C_8$-$C_{10}$-n-Alkylphthalate. Bevorzugt sind davon Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutyl-phthalat sowie die genannten Mischungen von Alkylphthalaten. Besonders bevorzugt ist Di-2-ethylhexyl-, Di-iso-nonyl- und Di-iso-decylphthalat. Gebräuchlich sind die Abkürzungen DOP (Dioctylphthalat, Di-2-ethylhexyl-phthalat), DINP (Diisononylphthalat), DIDP (Diisodecylphthalat).

B) Ester aliphatischer Dicarbonsäuren, insbesondere Ester von Adipin-, Azelain- und Sebazinsäure
Beispiele für solche Weichmacher sind Di-2-ethylhexyladipat, Di-isooctyladipat (Gemisch), Di-iso-nonyladipat (Gemisch), Di-iso-decyladipat (Gemisch), Benzylbutyladipat, Benzyloctyladipat, Di-2-ethylhexylazelat, Di-2-ethylhexylsebacat und Di-iso-decylsebacat (Gemisch). Bevorzugt sind Di-2-ethylhexyladipat und Di-iso-octyladipat.

C) Trimellithsäureester,
beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-$C_6$-$C_8$-alkyl, Tri-$C_6$-$C_{10}$-alkyl-, Tri-$C_7$-$C_9$-alkyl- und Tri-$C_9$-$C_{11}$-alkyl-trimellithate. Die letztgenannten Trimellithate entstehen durch Veresterung der Trimellithsäure mit den entsprechenden Alkanolgemischen. Bevorzugte Trimellithate sind Tri-2-ethylhexyltrimellithat und die genannten Trimellithate aus Alkanolgemischen. Gebräuchliche Abkürzungen sind TOTM (Trioctyltrimellithat, Tri-2-ethylhexyl-trimellithat), TIDTM (Triisodecyltrimellithat) und TITDTM (Triisotridecyltrimellithat).

D) Epoxidweichmacher
In der Hauptsache sind das epoxidierte ungesättigte Fettsäuren wie z.B. epoxidiertes Sojabohnenöl.

E) Polymerweichmacher
Eine Definition dieser Weichmacher und Beispiele für solche sind in "Plastics Additives", Herausgeber R. Gächter und H. Müller, Hanser Verlag, 1990, Seite 393, Kapitel 5.9.6, sowie in "PVC Technology ", Herausgeber W.V. Titow, 4th. Ed., Elsevier Publ., 1984, Seiten 165-170 angegeben. Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol; Monocarbonsäuren wie Essig-, Capron-, Capryl-, Laurin-, Myristin-, Palmitin-, Stearin-, Pelargon-und Benzoesäure; monofunktionelle Alkohole wie Isooctanol, 2-Ethylhexanol, Isodecanol sowie $C_7$-$C_9$-Alkanol- und $C_9$-$C_{11}$-Alkanolgemische. Besonders vorteilhaft sind Polyesterweichmacher aus den genannten Dicarbonsäuren und monofunktionellen Alkoholen.

F) Phosphorsäureester
Eine Definition dieser Ester ist im vorstehend genannten Handbuch "Plastics Additives" auf Seite 390, Kapitel 5.9.5 zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat. Bevorzugt sind Tri-2-ethylhexyl-phosphat sowie ®Reofos 50 und 95.

G) Chlorierte Kohlenwasserstoffe (Paraffine)

H) Kohlenwasserstoffe

I) Monoester, z.B. Butyloleat, Phenoxyethyloleat, Tetrahydrofurfuryloleat, Glycerinmonooleat und Alkylsulfonsäureester.

J) Glykolester, z.B. Diglykolbenzoate.

Definitionen und Beispiele für Weichmacher der Gruppen G) bis J) sind den folgenden Handbüchern zu entnehmen:
"Plastics Additives", Herausgeber R. Gächter und H. Müller, Hanser Verlag, 1990, Seite 284, Kapitel 5.9.14.2 (Gruppe G)), und Kapitel 5.9.14.1 (Gruppe H)).
"PVC Technology", Herausgeber W.V. Titow, 4th. Ed., Elsevier Publishers, 1984, Seiten 171-173, Kapitel 6.10.2 (Gruppe G)), Seite 174, Kapitel 6.10.5 (Gruppe H)), Seite 173, Kapitel 6.10.3 (Gruppe I)) und Seiten 173-174, Kapitel 6.10.4 (Gruppe J)).
Besonders bevorzugt sind Weichmacher aus den Gruppen A) bis G), insbesondere A) bis F), vor allem die in diesen Gruppen als bevorzugt herausgestellten Weichmacher.
Im allgemeinen sind von den Weichmachern der Gruppen A), B) C)und E) 5 bis 120, besonders 10 bis 100 Teile,
von denen der Gruppe D) 0,5 bis 30, besonders 0,5 bis 20 Teile,
von denen der Gruppe F) bzw. G) 1 bis 100, besonders 2 bis 80 Teile vorhanden.
Es können auch Mischungen unterschiedlicher Weichmacher verwendet werden.
Die Weichmacher können dabei insgesamt in einer Menge von beispielsweise 5 bis 120, zweckmäßig 10 bis 100 und insbesondere 20 bis 70 Gew.-Teilen, bezogen auf 100 Gew.-Teile PVC, angewendet werden.

Perchlorate

Die oben als Komponente (b) genannten Perchlorate (bzw. Perchlorsäure) entsprechen der Formel $M(ClO_4)_n$ wobei $M^+$ für $H^+$, $NH_4^+$, $Na^+$, $K^+$, $Mg^{2+}$, $Ca^{2+}$, $Ba^{2+}$ oder $Al^{3+}$ steht. Der Index n ist entsprechend der Wertigkeit von M 1, 2 oder 3.
Die Perchlorsäure oder das jeweilige Perchlorat können dabei in verschiedenen gängigen Darreichungsformen eingesetzt werden; z.B als Salz oder wäßrige Lösung aufgezogen auf ein Trägermaterial wie PVC, Ca-Silikat, Zeolithe oder Hydrotalcite, oder eingebunden durch chemische Reaktion in einen Hydrotalcit.
Sie können in einer Menge von beispielsweise 0,001 bis 5, zweckmäßig 0,01 bis 3, besonders bevorzugt 0,01 bis 2,0 Gew.-Teilen, bezogen auf 100 Gew.-Teile PVC, angewandt werden.

Epoxidverbindungen

Die im Rahmen der Erfindung verwendbaren endständigen Epoxidverbindungen (c) können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.
Die Epoxidverbindungen enthalten mindestens einen Epoxidrest der Formel

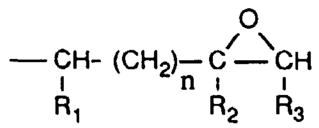
,

worin $R_1$ und $R_3$ beide Wasserstoff sind, $R_2$ Wasserstoff oder Methyl und n = 0 ist, oder worin $R_1$ und $R_3$ zusammen $-CH_2-CH_2-$ oder $-CH_2-CH_2-CH_2-$ bedeuten, $R_2$ dann Wasserstoff und n = 0 oder 1 ist und dieser Epoxidrest direkt an Kohlenstoff, Sauerstoff-, Stickstoff- oder Schwefelatome gebunden ist.
Beispielhaft für Epoxidverbindungen sind zu erwähnen:
I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. β-Methyl-epichlorhydrin. Die Umsetzung erfolgt zweckmäßig in der Gegenwart von Basen.
Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure, Capron-, Capryl-, Laurin-, Myristin-, Palmitin-, Stearin- und Pelargonsäure, sowie die bei den organischen Zinkverbindungen erwähnten Säuren.
Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.
Weiterhin können aromatische Carbonsäuren Verwendung finden, wie beispielsweise Benzoesäure, Phthalsäure, Isophthalsäure, Trimellithsäure oder Pyromellithsäure.
Ebenfalls können auch carboxylterminierte Addukte, z.B. von Trimellithsäure und Polyolen, wie beispielsweise Glycerin oder 2,2-Bis-(4-hydroxycyclohexyl)-propan verwendet werden.
Weitere im Rahmen dieser Erfindung verwendbare Epoxidverbindungen finden sich in der EP 0 506 617.
II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschließender Alkalibehandlung.
Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie $C_7$-$C_9$-Alkanol- und $C_9$-$C_{11}$-Alkanolgemischen.
Sie leiten sich aber auch beispielsweise ab von cycloaliphatischen Alkoholen wie 1,3-oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.
Weitere mögliche endständige Epoxide sind beispielsweise: Glycidyl-1-naphthylether, Glycidyl-2-phenylphenylether, 2-Biphenylglycidylether, N-(2,3-Epoxypropyl)-phthalimid und 2,3-Epoxypropyl-4-methoxyphenylether.
III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um

Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N"-Tri- und N,N',N",N'"-Tetraglycidylderivate von Cycloalkylenharnstoffen, wie Ethylenharnstoff oder 1,3-Propylenharnstoff, und N,N-Diglycidylderivate von Hydantoinen, wie von 5,5-Dimethylhydantoin oder Glykoluril und Triglycidylisocyanurat.

IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.

V) Epoxidverbindungen mit einem Rest der Formel I, worin $R_1$ und $R_3$ zusammen $-CH_2-CH_2-$ bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der Formel I, worin $R_1$ und $R_3$ zusammen $-CH_2-CH_2-$ sind und n 1 bedeutet, ist beispielsweise 3,4-Epoxy-6-methyl-cyclohexancarbonsäure-(3',4'-epoxy-6'-methyl-cyclohexyl)-methylester.

Geeignete endständige Epoxide sind beispielsweise:

a) flüssige Bisphenol-A-diglycidylether wie Araldit®GY 240, Araldit®GY 250, Araldit®GY 260, Araldit®GY 266, Araldit®GY 2600, Araldit®MY 790;
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610;
c) flüssige Bisphenol-F-diglycidylether wie Araldit®GY 281, Araldit®PY 302, Araldit®PY 306;
d)feste Polyglycidylether von Tetraphenylethan wie CG Epoxy Resin®0163;
e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell® Glycidylether 162, Araldit®DY 0390, Araldit®DY 0391;
h)flüssige Glycidylether von Carbonsäuren wie Shell®Cardura E Terephthalsäureester, Trimellithsäureester, Araldit®PY 284;
i) feste heterocyclische Epoxidharze (Triglycidylisocyanurat) wie Araldit® PT 810;
j) flüssige cycloaliphatische Epoxidharze wie Araldit®CY 179;
k) flüssige N,N,O-Triglycidylether von p-Aminophenol wie Araldit®MY 0510;
l) Tetraglycidyl4-4'-methylenbenzamin oder N,N,N'N'-Tetraglycidyldiaminophenylmethan wie Araldit®MY 720, Araldit®MY 721.

Vorzugsweise finden Epoxidverbindungen mit zwei funktionellen Gruppen Verwendung. Es können aber auch prinzipiell Epoxidverbindungen mit einer, drei oder mehr funktionellen Gruppen eingesetzt werden.

Vorwiegend werden Epoxidverbindungen, vor allem Diglycidylverbindungen, mit aromatischen Gruppen eingesetzt.

Gegebenenfalls kann auch ein Gemisch verschiedener Epoxidverbindungen eingesetzt werden.

Besonders bevorzugt sind als endständige Epoxidverbindungen Diglycidylether auf der Basis von Bisphenolen, wie beispielsweise von 2,2-Bis-(4-hydroxyphenyl)-propan (Bisphenol A), Bis-(4-hydroxyphenyl)-methan oder Mischungen von Bis-(ortho/para-hydroxyphenyl)-methan (Bisphenol F).

Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

Das erfindungsgemäß stabilisierte Weich-PVC kann weitere Additive enthalten. Es handelt sich beispielsweise um Füllstoffe und Verstärkungsmittel (wie beispielsweise Calciumcarbonat, Silikate, Glasfasern, Talk, Kaolin, Kreide, Glimmer, Metalloxide und -hydroxide, Ruß oder Graphit), Metallseifen und weitere Metallstabilisatoren, Antioxidantien, Polyole, Zeolithe, Dawsonite, Hydrotalcite, organische Phosphite, 1,3-Diketoverbindungen, Dihydropyridine, α-Phenylindol, Pyrrole, β-Naphthol, Hydroxydiphenylamine, sterisch gehinderte Amine (HALS), Lichtschutzmittel, UV-Absorber, Gleitmittel, Fettsäureester, Paraffine, Treibmittel, optische Aufheller, Pigmente, Flammschutzmittel, Antistatika, β-Aminocrotonate (z.B. wie in EP 0 465 405, S. 6, Z. 9-14 erwähnt), Phosphate, Thiophosphate, Gelierhilfen, peroxidzerstörende Verbindungen, Modifikatoren und weitere Komplexbildner für Lewis-Säuren.

<u>Füllstoffe</u>

Als Füllstoffe werden z.B. Kreide, Kaolin, China-Clay, Talk, Silikate, Glasfasern, Glaskugeln, Holzmehl, Glimmer, Metalloxide, oder -hydroxide, Ruß, Graphit, Gesteinsmehl, Schwerspat verwendet. Bevorzugt sind Talk und Kreide.

Die Füllstoffe können in einer Menge von vorzugsweise mindestens 1 Teil, beispielsweise 5 bis 200, zweckmäßig 10 bis 150 und insbesondere 15 bis 100 Gew.-Teilen, bezogen auf 100 Gew.-Teile PVC, eingesetzt werden.

Metallseifen

Metallseifen sind in der Hauptsache Metallcarboxylate bevorzugt längerkettiger Carbonsäuren. Geläufige Beispiele sind Stearate und Laurate, auch Oleate und Salze kürzerkettiger Alkylcarbonsäuren. Als Metallseifen sollen auch Alkylbenzoesäuren gelten. Oft verwendet man sog. synergistische Mischungen wie Barium/Zink-, Magnesium/Zink-, Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, 5th Ed. Vol. A16 (1985) S.361 ff)

Zweckmäßig verwendet man organische Metallseifen aus der Reihe der aliphatischen gesättigten $C_2$-$C_{22}$-Carboxylate, der aliphatischen ungesättigten $C_3$-$C_{22}$-Carboxylate, der aliphatischen $C_2$-$C_{22}$-Carboxylate, die mit wenigstens einer OH-Gruppe substituiert sind, der cyclischen und bicyclischen Carboxylate mit 5-22 C-Atomen, der unsubstituierten, mit wenigstens einer OH-Gruppe substituierten und/oder $C_1$-$C_{16}$-alkylsubstituierten Phenylcarboxylate, der unsubstituierten, mit wenigstens einer OH-Gruppe substituierten und/oder $C_1$-$C_{16}$-alkylsubstituierten Naphthylcarboxylate, der Phenyl-$C_1$-$C_{16}$-alkylcarboxylate, der Naphthyl-$C_1$-$C_{16}$-alkylcarboxylate oder der gegebenenfalls mit $C_1$-$C_{12}$-Alkyl substituierten Phenolate, Tallate und Resinate.

Namentlich zu erwähnen sind, als Beispiele, die Zink-, Calcium-, Magnesium- oder Bariumsalze der monovalenten Carbonsäuren, wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Isostearinsäure, Stearinsäure, 12-Hydroxystearinsäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, und Sorbinsäure; Calcium-, Magnesium- und Zinksalze der Monoester der divalenten Carbonsäuren, wie Oxalsäure, Malonsäure, Bernsteinsäure, Glutarsäure, Adipinsäure, Fumarsäure, Pentan-1,5-dicarbonsäure, Hexan-1,6-dicarbonsäure, Heptan-1,7-dicarbonsäure, Octan-1,8-dicarbonsäure, Phthalsäure, Isophthalsäure, Terephthalsäure und Hydroxyphthalsäure; und der Di- oder Triester der tri-oder tetravalenten Carbonsäuren, wie Hemimellithsäure, Trimellithsäure, Pyromellithsäure, Zitronensäure.

Bevorzugt sind Calcium-, Magnesium- und Zink-Carboxylate von Carbonsäuren mit 7 bis 18 C-Atomen (Metallseifen im engeren Sinn), wie beispielsweise Benzoate oder Alkanoate, bevorzugt Stearat, Oleat, Laurat, Palmitat, Behenat, Hydroxystearate, Dihydroxystearate oder 2-Ethylhexanoat. Besonders bevorzugt sind Stearat, Oleat und p-tert-Butylbenzoat. Auch überbasische Carboxylate wie überbasisches Zinkoctoat sind bevorzugt.

Gegebenenfalls kann auch ein Gemisch von Carboxylaten unterschiedlicher Struktur eingesetzt werden. Bevorzugt sind Zusammensetzungen, wie beschrieben, enthaltend eine organische Zink- oder/ und Calciumverbindung.,

Neben den genannten Verbindungen kommen auch organische Aluminium-Verbindungen in Frage, insbesondere Verbindungen analog den oben erwähnten. Zu den verwendbaren und bevorzugten Aluminium-Verbindungen finden sich weitere Erläuterungen in US 4,060,512 und US 3,243,394.

Neben den bereits genannten Verbindungen kommen ferner auch organische Seltenerd-Verbindungen, insbesondere Verbindungen analog den oben erwähnten, in Frage. Unter dem Begriff Seltenerd-Verbindung sind vor allem Verbindungen der Elemente Cer, Praseodym, Neodym, Samarium, Europium, Gadolinium, Terbium, Dysprosium, Holmium, Erbium, Thulium, Ytterbium, Lutetium, Lanthan und Yttrium zu verstehen, wobei Gemische insbesondere mit Cer bevorzugt sind. Weitere bevorzugte Seltenerd-Verbindungen finden sich in der EP-A-0 108 023.

Gegebenenfalls kann ein Gemisch von Zink-, Erdalkali-, Aluminium-, Lanthan- oder Lanthanoid-Verbindung unterschiedlicher Struktur eingesetzt werden. Auch können organische Zink-, Aluminium-, Lanthan- oder Lanthanoid-Verbindungen auf eine Alumosalz-Verbindung gecoatet sein; siehe hierzu auch DE-A-40 31 818.

Die Metallseifen bzw. deren Mischungen können in einer Menge von beispielsweise 0,001 bis 10, zweckmäßig 0,01 bis 8, besonders bevorzugt 0,05 bis 5 Gew.-Teilen, bezogen auf 100 Gew.-Teile PVC, angewendet werden. Gleiches gilt für die weiteren Metallstabilisatoren:

Weitere Metallstabilisatoren

Hier sind vor allem die Organozinnstabilisatoren zu nennen. Insbesondere kann es sich um Carboxylate, Mercaptide und Sulfide handeln. Geeignete Verbindungen sind in US 4,743,640 beschrieben (Sp. 3-5).

β-Diketone

Verwendbare 1,3-Dicarbonylverbindungen können lineare oder cyclische Dicarbonylverbindungen sein. Bevorzugt werden Dicarbonylverbindungen der Formel

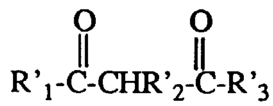

verwendet,

worin $R'_1$ $C_1$-$C_{22}$-Alkyl, $C_5$-$C_{10}$-Hydroxyalkyl, $C_2$-$C_{18}$-Alkenyl, Phenyl, durch OH, $C_1$-$C_4$-Alkyl, $C_1$-$C_4$-Alkoxy oder Halogen substituiertes Phenyl, $C_7$-$C_{10}$-Phenylalkyl, $C_5$-$C_{12}$-Cycloalkyl, durch $C_1$-$C_4$-Alkyl substituiertes $C_5$-$C_{12}$-Cycloalkyl oder eine Gruppe -$R_5$-S-$R_6$ oder -$R_5$-O-$R_6$ bedeutet, $R'_2$ Wasserstoff, $C_1$-$C_8$-Alkyl, $C_2$-$C_{12}$-Alkenyl, Phenyl, $C_7$-$C_{12}$-Alkylphenyl, $C_7$-$C_{10}$-Phenylalkyl oder eine Gruppe -CO-$R_4$ bedeutet, $R'_3$ eine der für $R'_1$ gegebenen Bedeutungen hat oder $C_1$-$C_{18}$-Alkoxy bedeutet, $R_4$ $C_1$-$C_4$-Alkyl oder Phenyl bedeutet,

$R_5$ $C_1$-$C_{10}$-Alkylen bedeutet und $R_6$ $C_1$-$C_{12}$-Alkyl, Phenyl, $C_7$-$C_{18}$-Alkylphenyl oder $C_7$-$C_{10}$-Phenylalkyl bedeutet.

Hierzu gehören die Hydroxylgruppen enthaltenden Diketone der EP-A-346 279 und die Oxa- und Thia-diketone der EP-A-307 358 ebenso wie die auf Isocyansäure basierenden Diketone der US 4,339,383.

$R'_1$ und $R'_3$ als Alkyl können insbesondere $C_1$-$C_{18}$-Alkyl sein, wie z.B. Methyl, Ethyl, n-Propyl, Isopropyl, n-Butyl, tert- Butyl, Pentyl, Hexyl, Heptyl, Octyl, Decyl, Dodecyl oder Octadecyl.

$R'_1$ und $R'_3$ als Hydroxyalkyl stellen insbesondere eine Gruppe $-(CH_2)_n-OH$ dar, worin n 5, 6 oder 7 ist.

$R'_1$ und $R'_3$ als Alkenyl können beispielsweise Vinyl, Allyl, Methallyl, 1-Butenyl, 1-Hexenyl oder Oleyl bedeuten, vorzugsweise Allyl.

$R'_1$ und $R'_3$ als durch OH, Alkyl, Alkoxy oder Halogen substituiertes Phenyl können beispielsweise Tolyl, Xylyl, tert- Butylphenyl, Methoxyphenyl, Ethoxyphenyl, Hydroxyphenyl, Chlorphenyl oder Dichlorphenyl sein.

$R'_1$ und $R'_3$ als Phenylalkyl sind insbesondere Benzyl. $R'_2$ und $R'_3$ als Cycloalkyl oder Alkyl-cycloalkyl sind insbesondere Cyclohexyl oder Methylcyclohexyl.

$R'_2$ als Alkyl kann insbesondere $C_1$-$C_4$-Alkyl sein. $R'_2$ als $C_2$-$C_{12}$-Alkenyl kann insbesondere Allyl sein. $R'_2$ als Alkylphenyl kann insbesondere Tolyl sein. $R'_2$ als Phenylalkyl kann insbesondere Benzyl sein. Vorzugsweise ist $R'_2$ Wasserstoff. $R'_3$ als Alkoxy kann z.B. Methoxy, Ethoxy, Butoxy, Hexyloxy, Octyloxy, Dodecyloxy, Tridecyloxy, Tetradecyloxy oder Octadecyloxy sein. $R_5$ als $C_1$-$C_{10}$-Alkylen ist insbesondere $C_2$-$C_4$-Alkylen. $R_6$ als Alkyl ist insbesondere $C_4$-$C_{12}$-Alkyl, wie z.B. Butyl, Hexyl, Octyl, Decyl oder Dodecyl. $R_6$ als Alkylphenyl ist insbesondere Tolyl. $R_6$ als Phenylalkyl ist insbesondere Benzyl.

Beispiele für 1,3-Dicarbonylverbindungen der obigen Formel sind Acetylaceton, Butanoylaceton, Heptanoylaceton, Stearoylaceton, Palmitoylaceton, Lauroylaceton, 7-tert-Nonylthio-heptandion-2,4, Benzoylaceton, Dibenzoylmethan, Lauroylbenzoylmethan, Palmitoyl-benzoylmethan, Stearoyl-benzoylmethan, Isooctylbenzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl-benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoylformylmethan, Benzoyl-phenylacetylmethan, Bis(cyclohexanoyl)methan, Di(pivaloyl)methan, Acetessigsäure-methylester, -ethylester, -hexylester, -octylester, -dodecylester oder -octadecylester, Benzoylessigsäure-ethylester, -butylester, -2-ethylhexylester, -dodecylester oder -octadecylester, Stearoylessigsäure-ethyl-, -propyl-, -butyl-, -hexyl- oder -octylester und Dehydracetsäure sowie deren Zink-, Calcium- oder Magnesiumsalze.

Bevorzugt sind 1,3-Diketoverbindungen der obigen Formel, worin $R'_1$ $C_1$-$C_{18}$-Alkyl, Phenyl, durch OH, Methyl oder Methoxy substituiertes Phenyl, $C_7$-$C_{10}$-Phenylalkyl oder Cyclohexyl ist, $R'_2$ Wasserstoff ist und $R'_3$ eine der für $R'_1$ gegebenen Bedeutungen hat.

Die 1,3-Diketoverbindungen können in einer Menge von beispielsweise 0,01 bis 10, zweckmäßig 0,01 bis 3 und insbesondere 0,01 bis 2 Gew.-Teilen, bezogen auf 100 Gew.-Teile PVC, angewendet werden.

Als Antioxidantien kommen beispielsweise in Betracht:

1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol, Octylphenol, Nonylphenol und Mischungen davon.

2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.

4. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.

5. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl) butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

6. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat.

7. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.

8. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.

9. Triazinverbindungen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.

10. Phosphonate, Phosphite und Phosphonite z.B. Dimethyl-2,5-di-tert-butyl4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters, Triphenylphosphit, Diphenylalkylphosphite, Phenyldialkylphosphite, Tris-(nonylphenyl)phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)pentaerythritdiphosphit, Bis-isodecyloxy-pentaerythritdiphosphit, Bis-(2,4-di-tert-butyl-6-methylphenyl)-pentaerythritdiphosphit, Bis-(2,4,6-tri-tert-butylphenyl)pentaerythritdiphosphit, Tristearyl-sorbit-triphosphit, Tetrakis-(2,4-di-tert-butylphenyl)4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis-(2,4-di-tert-butyl-6-methylphenyl)-methylphosphit, Bis-(2,4-di-tert-butyl-

6-methylphenyl)-ethylphosphit, $(C_9H_{19}\text{-}C_6H_4\text{-}O)_{1,5}\text{-}P\text{-}(O\text{-}C_{12\text{-}13}H_{25\text{-}27})_{1,5}$.

11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

12. Ester der β-(3,5-Di-tert-butyl-4-hydroxyphenyl)-propionsäure mit ein- oder mehrwertigen Alkoholen, wie z.B. mit Methanol, Ethanol, Octanol, Ocadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Dipentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, Di-trimethylolpropan, 4-Hydroxymethyl-1-phospha-2,6,7-trioxabicyclo-[2.2.2]octan.

13. Ester der β-(5-tert-Butyl-4-hydroxy-3-methylphenyl)-propionsäure mit ein- oder mehrwertigen Alkoholen, wie z.B. mit Methanol, Ethanol, Octanol, Ocadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

14. Ester der β-(3,5-Dicyclohexyl-4-hydroxyphenyl)-propionsäure mit ein- oder mehrwertigen Alkoholen, wie z.B. mit Methanol, Ethanol, Octanol, Ocadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

15. Ester der 3,5-Di-tert-butyl-4-hydroxyphenylessigsäure mit ein- oder mehrwertigen Alkoholen, wie z.B. mit Methanol, Ethanol, Octanol, Ocadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

16. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Bevorzugt sind Antioxidantien der Gruppen 1-5, 10 und 12 insbesondere 2,2-Bis-(4-hydroxyphenyl)-propan, Ester der 3,5-Di-tert-butyl-4-hydroxyphenylpropionsäure mit Octanol, Ocadecanol oder Pentaerythrit oder Tris-(2,4-di-tert-butylphenyl)-phosphit.

Gegebenenfalls kann auch ein Gemisch von Antioxidantien unterschiedlicher Struktur eingesetzt werden.

Die Antioxidantien können in einer Menge von beispielsweise 0,01 bis 10, zweckmäßig 0,1 bis 10 und insbesondere 0,1 bis 5 Gew.-Teilen, bezogen auf 100 Gew.-Teile PVC, angewendet werden.

Als <u>UV-Absorber und Lichtschutzmittel</u> kommen beispielsweise in Betracht:

1. 2-(2'-Hydroxyphenyl)-benztriazole, wie z.B. 2-(2'-Hydroxy-5'-methylphenyl)-benztriazol, 2-(3',5'-Di-tert-butyl-2'-hydroxyphenyl)-benztriazol, 2-(5'-tert-Butyl-2'-hydroxyphenyl)-benztriazol, 2-(2'-Hydroxy-5'-(1,1,3,3-tetramethylbutyl)phenyl)-benztriazol, 2-(3',5'-Di-tert-butyl-2'-hydroxyphenyl)-5-chlor-benztriazol, 2-(3'-tert-Butyl- 2'-hydroxy-5'-methylphenyl)-5-chlor-benztriazol, 2-(3'-sec-Butyl-5'-tert-butyl-2'-hydroxyphenyl)-benztriazol, 2-(2'-Hydroxy-4'-octoxyphenyl)-benztriazol, 2-(3',5'-Di-tert-amyl-2'-hydroxyphenyl)-benztriazol, 2-(3',5'-Bis-(α,α-dimethylbenzyl)-2'-hydroxyphenyl)-benztriazol, Mischung aus 2-(3'-tert-Butyl-2'-hydroxy-5'-(2-octyloxycarbonylethyl)phenyl)-5-chlor-benztriazol, 2-(3'-tert-Butyl-5'-[2-(2-ethylhexyloxy)-carbonylethyl]-2'-hydroxyphenyl)-5-chlor-benztriazol, 2-(3'-tert-Butyl-2'-hydroxy-5'-(2-methoxycarbonylethyl)phenyl)-5-chlor-benztriazol, 2-(3'-tert-Butyl-2'-hydroxy-5'-(2-methoxycarbonylethyl)phenyl)-benztriazol, 2-(3'-tert-Butyl-2'-hydroxy-5'-(2-octyloxycarbonylethyl)phenyl)-benztriazol, 2-(3'-tert-Butyl-5'-[2-(2-ethylhexyloxy)carbonylethyl]-2'-hydroxyphenyl)-benztriazol, 2-(3'-Dodecyl-2'-hydroxy-5'-methylphenyl)-benztriazol, und 2-(3'-tert-Butyl-2'-hydroxy-5'-(2-isooctyloxycarbonylethyl)phenyl-benztriazol, 2,2'-Methylen-bis[4-(1,1,3,3-tetramethylbutyl)-6-benztriazol-2-yl-phenol] ; Umesterungsprodukt von 2-[3'-tert-Butyl-5'-(2-methoxycarbonylethyl)-2'-hydroxy-phenyl]-benztriazol mit Polyethylenglycol 300; $[R\text{-}CH_2CH_2\text{-}COO(CH_2)_3]_2$ mit R = 3'-tert-Butyl-4'-hydroxy-5'-2H-benztriazol-2-yl-phenyl.

2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

4. Acrylate, wie z.B. α-Cyan-β,β-diphenylacrylsäure-ethylester bzw. -isooctylester, α-carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

5. Nickelverbindungen, wie z.B. Nickelkomplexe des 2,2'-Thio-bis-[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, -pyrazols, gegebenenfalls mit zusätzlichen Liganden.

6. Sterisch gehinderte Amine, wie z.B. Bis-(2,2,6,6-tetramethyl-piperidyl)-sebacat, Bis-(2,2,6,6-tetramethyl-piperidyl)-succinat, Bis-(1,2,2,6,6-pentamethylpiperidyl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-Bis-(2,2,6,6-Tetramethyl-4-piperidyl)-hexamethylendiamin und 4-tert-Octylamino-2,6-dichlor-1,3,5-s-triazin, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)-bis-(3,3,5,5-tetramethyl-piperazinon), 4-Benzoyl-2,2,6,6-tetramethylpiperidin, 4-Stearyloxy-2,2,6,6-tetramethylpiperidin, Bis-(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis-(3-aminopropylamino)äthan, Kondensationsprodukt aus 2-Chlor-4,6-di-(4-n-butylamino-1,2,2,6,6-pentamethylpiperidyl)-1,3,5-triazin und 1,2-Bis-(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.

7. Oxalsäurediamide, wie z.B. 4,4'-Di-octyloxy-oxanilid, 2,2'-Di-octyloxy-5,5'-di-tert-butyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

8. 2-(2-Hydroxyphenyl)-1,3,5-triazine, wie z.B. 2,4,6-Tris(2-hydroxy4-octyloxyphenyl)-1,3,5-triazin, 2-(2-Hydroxy-4-octyloxyphenyl)-4,6-bis-(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyi)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

Als <u>peroxidzerstörende Verbindungen</u> kommen beispielsweise in Betracht: Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat oder Ethylenglykolbismercaptoacetat.

Als <u>Gleitmittel</u> kommen beispielsweise in Betracht:
Montanwachs, Fettsäureester, Komplexester, PE-Wachse, Amidwachse, Chlorparaffine, Glycerinester oder Erdalkaliseifen. Verwendbare Gleitmittel sind auch in "Plastics Additives", Herausgeber R. Gächter und H. Müller, Hanser Verlag, 3. Auflage, 1990, Kap. 6, Seiten 423-480 sowie in "Kunststoff Handbuch PVC" 2/1 20. Aufl. 1986, S. 570-595, beschrieben.

Als <u>weitere metallfreie Stabilisatoren</u> kommen beispielsweise β-Naphthol, Hydroxydiphenylamin, α-Phenylindol, β-Aminocrotonate und Pyrrole, wie z.B. in EP-A-465405 beschrieben, in Betracht.

Als <u>Polyole</u> kommen beispielsweise in Betracht:

Pentaerythrit, Dipentaerythrit, Tripentaerythrit, Bistrimethylolpropan, Bistrimethylolethan, Trismethylolpropan, Sorbit, Maltit, Isomaltit, Lactit, Lycasin, Mannit, Lactose, Leucrose, Tris-(hydroxyethyl)-isocyanurat, Palatinit, Tetramethylolcyclohexanol, Tetramethylolcyclopentanol, Tetramethylolcyclopyranol, Glycerin, Diglycerin, Polyglycerin oder 1-0-α-D-Glycopyranosyl-D-mannit-dihydrat. Bevorzugt sind davon die Disaccharidalkohole.

Die Polyole können in einer Menge von beispielsweise 0,01 bis 20, zweckmäßig 0,1 bis 20 und insbesondere 0,1 bis 10 Gew.-Teilen, bezogen auf 100 Gew.-Teile PVC, angewendet werden.

Es kommen <u>organische Phosphite</u> der allgemeinen Formel $P(OR)_3$ in Betracht, wobei die Reste R gleiche oder verschiedene Alkyl-, Alkenyl-, Aryl- oder Aralkyl-Reste bedeuten. Bevorzugte organische Phosphite sind solche der Formeln

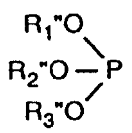 und 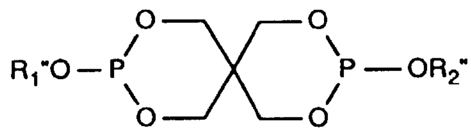

worin $R_1$", $R_2$" und $R_3$" gleich oder verschieden sind und $C_6$-$C_{18}$-Alkyl, $C_6$-$C_{18}$-Alkenyl, einen substituierten oder unsubstituierten Phenylrest oder $C_5$-$C_7$-Cycloalkyl bedeuten.

Bedeuten $R_1$", $R_2$" und $R_3$" $C_6$-$C_{18}$-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten $R_1$", $R_2$" und $R_3$" beispielsweise Tolyl, Ethylphenyl, Xylyl, Cumyl, Cymyl, Kresyl, 4-Methoxyphenyl, 2,4-Di-methoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert-butylphenyl)-di-dodecylphosphit, (2,6-Di-tert-butylphenyl)-di-dodecylphosphit und die Dialkyl-und Diaryl-pentaerythrit-diphosphite, wie Distearylpentaerythrit-diphosphit, sowie nichtstöchiometrische Triarylphosphite. z.B. der Zusammensetzung $(H_{19}C_9\text{-}C_6H_4)O_{1,5}P(OC_{12/13}H_{25/27})_{1,5}$. Bevorzugte organische Phosphite sind Distearyl-pentaerythrit-diphosphit, Trisnonylphenylphosphit und Phenyl-didecyl-phosphit.

Die organischen Phosphite können in einer Menge von beispielsweise 0,01 bis 10, zweckmäßig 0,05 bis 5 und insbesondere 0,1 bis 3 Gew.-Teilen, bezogen auf 100 Gew.-Teile PVC, angewendet werden.

Als Verbindungen aus der Reihe der <u>Hydrotalcite oder Zeolithe</u> kommen sowohl die natürlich vorkommenden Mineralien als auch synthetisch hergestellte Verbindungen in Betracht. Die zusätzliche Verwendung von Hydrotalciten oder/und Zeolithen in den erfindungsgemäßen Zusammensetzungen ist bevorzugt, da diese Verbindungen die Stabilisierung synergistisch verstärken können.

Verbindungen aus der Reihe der Hydrotalcite können durch die allgemeine Formel I,

$$M^{2+}_{1-x} \bullet M^{3+}_{x} \bullet (OH)_2 \bullet (A^{n-})_{x/n} \bullet mH_2O \qquad (I)$$

beschrieben werden,
wobei

| | |
|---|---|
| $M^{2+}$ | = Mg, Ca, Sr, Zn, Sn und/oder Ni ist, |
| $M^{3+}$ | = Al, B oder Bi ist, |
| An | ein Anion mit der Valenz n darstellt, |
| n | eine Zahl von 1-4 ist, |
| x | eine Zahl von 0-0,5 ist, |
| m | eine Zahl von 0-2 ist. |

Bevorzugt ist

$A^n$ = $OH^-$, $Cl^-$, $Br^-$, $I^-$, $ClO_4^-$, $HCO_3^-$, $CH_3COO^-$, $C_6H_5COO^-$, $CO_3^{2-}$, $SO_4^{2-}$,

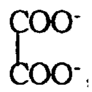

$(CHOHCOO)_2^{2-}$, $(CHOH)_4CH_2OHCOO^-$. $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$ oder $HPO_4^{2-}$ darstellt; weitere Beispiele finden sich in DE 41 06 403.

Andere Hydrotalcite, die zweckmäßig eingesetzt werden können, sind Verbindungen mit der allgemeinen Formel Ia,

$$M_x^{2+}Al_2(OH)_{2x+6nz}(A^{n-})_2 \bullet mH_2O \qquad (Ia)$$

wobei in vorliegender Formel Ia $M^{2+}$ wenigstens ein Metall aus der Reihe von Mg und Zn darstellt und Mg bevorzugt ist, $A^{n-}$ ein Anion, beispielsweise aus der Reihe von $CO_3^{2-}$,

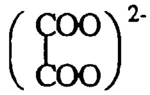,

$OH^-$ und $S^{2-}$ darstellt, wobei n die Valenz des Anions ist, m eine positive Zahl, vorzugsweise von 0,5 bis 5, darstellt und x und z positive Zahlen darstellen, wobei x vorzugsweise 2 bis 6 ist und z kleiner als 2 ist.

Bevorzugt sind Verbindungen aus der Reihe der Hydrotalcite der allgemeinen Formel I,

$$M_{1-x}^{2+} \bullet M_x^{3+} \bullet (OH)_2 \bullet (A^{n-})_{x/n} \bullet mH_2O \qquad (I)$$

wobei $M^{2+}$ die Bedeutung von Mg oder einer festen Lösung von Mg und Zn hat, $A^{n-}$ für $CO_3^{2-}$ steht, x eine Zahl von 0 bis 0,5 ist und m eine Zahl von 0 bis 2 ist.

Ganz besonders bevorzugt sind Hydrotalcite der Formeln

$$Al_2O_3 \cdot 6MgO \cdot CO_2 \cdot 12H_2O,$$

$$Mg_{4,5}Al_2(OH)_{13} \cdot CO_3 \cdot 3,5H_2O,$$

$$4MgO \cdot Al_2O_3 \cdot CO_2 \cdot 9H_2O,$$

$$4MgO \cdot Al_2O_3 \cdot CO_2 \cdot 6H_2O,$$

$$ZnO \cdot 3MgO \cdot Al_2O_3 \cdot CO_2 \cdot 8\text{-}9H_2O$$

oder

$$ZnO \cdot 3MgO \cdot Al_2O_3 \cdot CO_2 \cdot 5\text{-}6H_2O.$$

Die Hydrotalcite können in einer Menge von beispielsweise 0,1 bis 20, zweckmäßig 0,1 bis 10 und insbesondere 0,1 bis 5 Gew.-Teilen, bezogen auf 100 Gew.-Teile PVC, angewendet werden.

Zeolithe können durch die allgemeine Formel (X)

$$M_{x/n}[(AlO_2)_x(SiO_2)_y]\cdot wH_2O \qquad (X)$$

wobei n die Ladung des Kations M,
M ein Element der ersten oder zweiten Hauptgruppe, sowie Zink,
y : x eine Zahl zwischen 0,8 und unendlich, vorzugsweise zwischen 0,8 und 10,5 und w eine Zahl zwischen 0 und 300 ist, beschrieben werden.

Weiter sind erfindungsgemäß verwendbare Zeolithe aus "Atlas of Zeolite Structure Types", W.M. Meier und D.H. Olson, Verlag Butterworths, 3. Auflage 1992, bekannt.

Zu Zeolithen im weiteren Sinne sind auch Aluminiumphosphate mit Zeolithstruktur zu rechnen.

Die bevorzugten an sich bekannten Zeolithe weisen einen durchschnittlichen wirksamen Porendurchmesser von 3-5 Å auf und können nach bekannten Methoden hergestellt werden. Besonders bevorzugt sind Zeolithe vom Typ NaA, die einen durchschnittlichen wirksamen Porendurchmesser von 4 Å besitzen, weshalb sie auch als Zeolithe 4A bezeichnet werden.

Besonders bevorzugt sind kristalline Natriumalumosilikate, deren Teilchengröße wenigstens weitaus überwiegend im Bereich von 1-10 µ liegt.

In einer bevorzugten Ausführung der Erfindung können auch Natriumalumosilikate mit abgerundeten Ecken und Kanten verwendet werden. Zur Herstellung solcher Zeolithe geht man mit Vorteil von einem Ansatz aus, dessen molare Zusammensetzung im Bereich

$$2{,}5 - 6{,}0\ Na_2O\ .\ Al_2O_3 : 0{,}5 - 5{,}0\ SiO_2\ .\ 60 - 200\ H_2O$$

liegt. Dieser Ansatz wird in üblicher Weise zur Kristallisation gebracht. Dies geschieht vorteilhafterweise dadurch, daß man den Ansatz wenigstens 1/2 Stunde lang auf 70-120°C, vorzugsweise auf 80-95°C unter Rühren erwärmt. Das kristalline Produkt wird auf einfache Weise durch Abtrennen erhalten, nachgewaschen und dann getrocknet.

Im Rahmen der Erfindung lassen sich auch solche feinteiligen, wasserunlöslichen Natriumalumosilikate verwenden, die in Gegenwart von wasserlöslichen anorganischen oder organischen Dispergiermitteln gefällt und kristallisiert wurden. Als wasserlösliche organische Dispergiermittel eignen sich Tenside, nichttensidartige aromatische Sulfonsäuren und Verbindungen mit Komplexbildungsvermögen gegenüber Calcium. Die genannten Dispergiermittel können in beliebiger Weise vor oder während der Fällung in das Reaktionsgemisch eingebracht werden; sie können zum Beispiel als Lösung vorgelegt oder in der Aluminat- und/oder Silikatlösung aufgelöst werden. Die Menge des Dispergiermittels sollte wenigstens 0,05 Gewichtsprozent, vorzugsweise 0,1-5 Gewichtsprozent, bezogen auf den gesamten Fällungsansatz, betragen. Zum Kristallisieren wird das Fällungsprodukt 1/2 bis 24 Stunden auf 50 bis 200°C erhitzt. Aus der Vielzahl brauchbarer Dispergiermittel sind als Beispiele Natriumlaurylethersulfat, Natriumpolyacrylat und das Natriumsalz der 1-Hydroxyethan-1,1-diphosphonsäure zu nennen.

Bevorzugt ist stabilisiertes Weich-PVC, wie oben beschrieben, enthaltend mindestens eine der Verbindungen der Formeln

$$Na_{12}Al_{12}Si_{12}O_{48}\cdot 27\ H_2O\ \text{[Zeolith A]},$$

$$Na_6Al_6Si_6O_{24}\cdot 2\ NaX\cdot 7{,}5\ H_2O,\ X{=}\ OH,\ \text{Halogen},\ ClO_4\ \text{[Sodalith]}$$

$$Na_6Al_6Si_{30}O_{72}\cdot 24\ H_2O,$$

$$Na_8Al_8Si_{40}O_{96}\cdot 24\ H_2O,$$

$$Na_{16}Al_{16}Si_{24}O_{80}\cdot 16\ H_2O,$$

$$Na_{16}Al_{16}Si_{32}O_{96}\cdot 16\ H_2O,$$

$$Na_{56}Al_{56}Si_{136}O_{384} \cdot 250\ H_2O,\ [Zeolith\ Y]$$

$$Na_{86}Al_{86}Si_{106}O_{384} \cdot 264\ H_2O\ [Zeolith\ X]$$

oder die durch teilweisen bzw. vollständigen Austausch der Na-Atome durch Li-, K-, Mg-, Ca-, Sr- oder Zn-Atome darstellbaren Zeolithe wie

$$(Na,K)_{10}Al_{10}Si_{22}O_{64} \cdot 20\ H_2O\ .$$

$$Ca_{4,5}Na_3[(AlO_2)_{12}(SiO_2)_{12}] \cdot 30\ H_2O$$

$$K_9Na_3[(AlO_2)_{12}(SiO_2)_{12}] \cdot 27\ H_2O$$

Die Zeolithe können in einer Menge von beispielsweise 0,1 bis 20, zweckmäßig 0,1 bis 10 und insbesondere 0,1 bis 5 Gew.-Teilen, bezogen auf 100 Gew.-Teile PVC, angewendet werden.

Dawsonite können ebenfalls und in gleichen Mengen wie die Zeolithe dem PVC zugesetzt werden. Es handelt sich dabei um Alumocarbonate der Formel Na-(oder K- oder Li)$[A\ell(OH)_2CO_3] \cdot n\ H_2O$

Bevorzugt ist stabilisiertes Weich-PVC enthaltend 0,001-5,0 Teile je 100 Teile PVC eines Perchlorates oder Perchlorsäure und 0,1-50 Teile je 100 Teile PVC einer endständigen Epoxidverbindung sowie gegebenenfalls ein Antioxidans, insbesondere 0,01-10,0 Teile je 100 Teile PVC.

Bevorzugt ist ferner stabilisiertes Weich-PVC, enthaltend als Komponente (b) ein Alkalimetallperchlorat.

Bevorzugt ist ferner stabilisiertes Weich-PVC, enthaltend als Komponente (c) eine endständige Epoxidverbindung mit einer aromatischen Gruppe, insbesondere ein Bisphenolderivat.

Bevorzugt ist ferner stabilisiertes Weich-PVC, enthaltend zusätzlich Stoffe ausgewählt aus der Gruppe der Füllstoffe und Verstärkungsmittel, Antioxidantien, Metallseifen und weiteren metallhaltigen Stabilisatoren, Polyole, Zeolithe, Hydrotalcite, Dawsonite, organischen Phosphite, 1,3-Diketoverbindungen, Dihydropyridine, sterisch gehinderten Amine (HALS), Lichtschutzmittel, UV-Absorber, Gleitmittel, Fettsäureester, Paraffine, Treibmittel, optischen Aufheller, Pigmente, Flammschutzmittel, Antistatika, β-Aminocrotonate,
Pyrrole, Naphthole, Hydroxydiphenylamine, Phenylindole, Phosphate, Thiophosphate, Gelierhilfen, peroxidzerstörenden Verbindungen, Modifikatoren und weiteren Komplexbildner für Lewis-Säuren.

Bevorzugt ist ferner stabilisiertes Weich-PVC enthaltend, (b) 0,001-3,0 Teile je 100 Teile PVC eines Perchlorates und (c) 0,1-5,0 Teile je 100 Teile PVC eines endständigen Epoxidharzes.

Bevorzugt ist ferner stabilisiertes Weich-PVC, enthaltend zusätzlich ein phenolisches Antioxidans.

Bevorzugt ist ferner stabilisiertes Weich-PVC, enthaltend zusätzlich Füllstoffe, insbesondere Kreide.

Bevorzugt ist ferner stabilisiertes Weich-PVC, enthaltend zusätzlich eine oder mehrere Metallseifen, insbesondere Zinkseifen.

Bevorzugt ist ferner stabilisiertes Weich-PVC, enthaltend zusätzlich mindestens ein Additiv aus der Gruppe der Disaccharidalkohole, organischen Phosphite, Zeolithe, Hydrotalcite, Dawsonite, Aminocrotonate, Polyole, Diketone, Pyrrole, β-Naphthol oder Dihydropyridine.

Bevorzugt ist ferner stabilisiertes Weich-PVC, enthaltend zusätzlich mindestens ein Additiv aus der Gruppe der organischen Phosphite, Zeolithe, Dawsonite und Hydrotalcite.

Bevorzugt ist ferner stabilisiertes Weich-PVC, das zusätzlich ein sterisch gehindertes Amin, insbesondere 0,01-5 Teile je 100 Teile PVC, enthält.

Ein weiterer Gegenstand der vorliegenden Erfindung ist die Verwendung eines Perchlorates oder von Perchlorsäure in Kombination mit einer endständigen Epoxidverbindung zur Stabilisierung von PVC. Für die einzelnen Stabilisatoren sowie das PVC selbst gelten die vorstehend erläuterten Bevorzugungen, ebenso kann zusätzlich einer der oben beschriebenen weiteren Bestandteile verwendet werden.

Das erfindungsgemäße stabilisierte Weich-PVC kann auf an sich bekannte Weise hergestellt werden, wozu man unter Verwendung an sich bekannter Vorrichtungen, wie Kalander, Mischer, Kneter, Extruder und dergleichen, die genannten Stabilisatoren und gegegbenenfalls weitere Zusätze mit dem PVC vermischt. Hierbei können die Stabilisatoren einzeln oder in Mischung zugegeben werden oder auch in Form sogenannter Masterbatches. Die Erfindung betrifft somit auch ein Verfahren zur Herstellung von stabilisiertem Weich-PVC, dadurch gekennzeichnet, daß man unter Verwendung von Vorrichtungen, wie Kalander, Mischer, Kneter, Extruder und dergleichen, die Komponenten (b)

und (c) gemäß Anspruch 1 und gegegbenenfalls weitere Zusätze mit dem PVC vermischt.

Das nach vorliegender Erfindung stabilisierte Weich-PVC kann auf bekannte Weisen in die gewünschte Form gebracht werden. Solche Verfahren sind beispielsweise Mahlen, Kalandrieren, Extrudieren, Spritzgießen, Sintern oder Spinnen, ferner Extrusions-Blasen oder eine Verarbeitung nach dem Plastisol-Verfahren. Das stabilisierte Weich-PVC kann auch zu Schaumstoffen verarbeitet werden.

Das erfindungsgemäße Weich-PVC eignet sich besonders für Weich-Rezepturen, insbesondere in Form von Weichrezepturen für Drahtummantelungen, Kabelisolierungen, Dekorationsfolien, Schaumstoffen, Agrarfolien, Schläuchen, Dichtungsprofilen und Bürofolien.

Die folgenden Beispiele erläutern die Erfindung weiter, ohne sie darauf zu beschränken. Teile und Prozente beziehen sich, wie auch in der übrigen Beschreibung, auf das Gewicht, sofern nicht anders angegeben.

Beispiele:

Eine Weich-PVC-Zusammensetzung wird durch Vermischen der einzelnen Komponenten gemäß nachfolgenden Tabellen hergestellt (Mengenangaben in Gew.-Teilen). Die Bestandteile werden während 5 Minuten auf einem Mischwalzwerk bei 170°C homogenisiert, so daß man einen 0,3-0,5 mm dicken Film erhält.

Die Bestimmung der Langzeitstabilität erfolgt durch einen statischen Hitztest ("stat.H.") nach DIN 53381, wobei das Probestück bei 190°C in einem Testofen gelagert wird und die Zeit bis zur Schwärzung der Probe bestimmt wird.

Eine weitere Bestimmung der Langzeitstabilität ("VDE-Test") erfolgt durch die Ermittlung der thermischen Stabilität nach DIN VDE 0472. Das Probestück wird hierbei in ein unten zugeschmolzenes Glasrohr (AR-Glas der Firma Peco-Laborbedarf GmbH, Darmstadt) in einem Ölbad bei 200°C erwärmt und man bestimmt die Zeit bei der eine sichtbare Rotfärbung (entsprechend einem pH-Wert von 3) des pH-Universalindikatorpapieres beobachtet wird.

Eine weitere Bestimmung der Stabilität des PVC erfolgt durch den Dehydrochlorierungstest ("DHC-Test"), welcher in Anlehnung an DIN 53381, Bl. 3 durchgeführt wird. Hierbei wird bei der jeweils angegebenen Temperatur die Zeit bis zum Anstieg der Dehydrochlorierungskurve gemessen.

Dauerwalztest.

Die PVC Mischung wird bei einer Temperatur von 180°C auf einem Walzwerk mit Spaltbreite 0,5mm gewalzt, und alle 5 Minuten wird eine Probe entnommen, deren Yellowness Index (**YI**) nach Erkalten gemessen wird.

Tabelle I

| **Dehydrochlorierungstest bei 200°C** | | | | |
|---|---|---|---|---|
| **Mischung** | **1** | **2** | **3** | **4** |
| PVC K-Wert 70 | 100 | 100 | 100 | 100 |
| DIDP[1)]-Weichmacher | 49 | 49 | 49 | 49 |
| $NaClO_4$ | - | 0,05 | - | 0,05 |
| epox. Soja-Öl | 3,0 | 3,0 | - | - |
| Araldit GY 250[2)] | - | - | 3,0 | 3,0 |
| **Minuten** | **26,5** | **26,0** | **33,5** | **38,0** |

[1)]Di-iso-dodecylphthalat,

[2)] Bisphenol-A-diglycidylether (Araldit® GY 250)

Es zeigt sich, daß die Stabilisierung mit Epoxid und Perchlorat (Mischung 4) derjenigen mit epoxidiertem Sojabohnenöl und Perchlorat weit überlegen ist.

Tabelle II

| Statischer Hitzetest bei 190°C | | | |
|---|---|---|---|
| **Mischung** | **16** | **17** | **18** |
| PVC K-Wert 70 | 100 | 100 | 100 |
| DIDP[1)]-Weichmacher | 49 | 49 | 49 |
| $NaClO_4$ | 0,05 | 0,05 | 0,05 |
| Araldit GY 250[2)] | 3,0 | | |
| Araldit GT 1180[11)] | | 3,0 | |
| Araldit PY 306[12)] | | | 3,0 |
| **Minuten** | **50,0** | **50,0** | **55,5** |

1)Di-iso-dodecylphthalat,
2) Bisphenol-A-diglycidylether (Araldit® GY 250)
11)Epoxy/Phenol-Novolak enthaltend Aceton
12) Niederviskoser Bisphenol-F-Glycidylether

Es zeigt sich die gute Stabilisierung mit verschiedenen Epoxiden.

Tabelle III

| VDE-Test bei 200°C | | | |
|---|---|---|---|
| **Mischung** | **6** | **7** | **8** |
| PVC K-Wert 70 | 100 | 100 | 100 |
| DIDP[1)]-Weichmacher | 49 | 49 | 49 |
| Kreide | 50 | 50 | 50 |
| $NaClO_4$ | 0,05 | 0,05 | 0,05 |
| Araldit GY 250[2)] | 5 | 5 | 5 |
| Zn-Stearat | 0,6 | 0,6 | 0,6 |
| Maltitol | 0,5 | 0,5 | 0,5 |
| BisphenolA | 0,5 | 0,5 | 0,5 |
| β-Diketon[4)] | 0,3 | 0,3 | 0,3 |
| Wessalith P[6)] | | 1,0 | - |
| Alkamizer IV[5)] | - | | 1,0 |
| **Minuten** | **135** | **195** | **164** |

1)Di-iso-dodecylphthalat,
2) Bisphenol-A-diglycidylether (Araldit® GY 250)
4)Stearoylbenzoylmethan, Dibenzoylmethan
5)Hydrotalcit der Firma Kyowa
6)4A-Zeolith der Firma Degussa

Hier zeigt sich der Vorteil bei Zusatz von Zeolithen oder Hydrotalciten.

Tabelle IV

| VDE-Test bei 200°C | | | | |
|---|---|---|---|---|
| **Mischung** | **9** | **10** | **11** | **12** |
| PVC K-Wert 70 | 100 | 100 | 100 | 100 |
| DIDP[1]-Weichmacher | 49 | 49 | 49 | 49 |
| Kreide | 50 | 50 | 50 | 50 |
| $NaClO_4$ | 0,05 | 0,05 | 0,05 | 0,05 |
| Araldit GY 282[3] | 5 | 5 | 5 | 5 |
| Zn-Stearat | 0,6 | 0,6 | 0,6 | 0,6 |
| Maltitol | 0,5 | 0,5 | 0,5 | 0,5 |
| BisphenolA | 0,5 | 0,5 | 0,5 | 0,5 |
| β-Diketon | 0,3 | 0,3 | 0,3 | 0,3 |
| Wessalith P[6] | 1,00 | | | |
| m-OH-DPA[8] | | 0,3 | | |
| Pyrrol | | | 0,3 | |
| β-Naphthol | | | | 0,3 |
| **Minuten** | **202** | **206** | **200** | **205** |

1) Di-iso-dodecylphthalat,
3) Bisphenol-F-diglycidylether (Araldit® GY 282)
8) m-Hydroxydiphenylamin

Hier zeigt sich der positive Effekt von organischen Costabilisatoren

Tabelle V

| Dehydrochlorierungstest bei 200°C | | | |
|---|---|---|---|
| **Mischung** | **13** | **14** | **15** |
| PVC K-Wert 70 | 100 | 100 | 100 |
| DIDP[1]-Weichmacher | 50 | 50 | 50 |
| $NaClO_4$ | 0,05 | 0,05 | 0,05 |
| Araldit GY 250[2] | 3 | 3 | 3 |
| BisphenolA | 0,5 | | |
| Irganox 1076[7] | | 0,5 | |
| Irganox 1010[8] | | | 0,5 |
| **Minuten** | **43** | **51** | **52** |

1) Di-iso-dodecylphthalat,
2) Bisphenol-A-diglycidylether (Araldit® GY 250)
3) Bisphenol-F-diglycidylether (Araldit® GY 282)
7) Octadecyl-3-(3,5-di-tert-butyl-4-hydroxyphenyl)propionat
8) Pentaerythrityl-tetrakis-3-(3,5-Di-tert-butyl-4-hydroxyphenyl)propionat

Es zeigt sich der Vorteil bei zusätzlicher Verwendung eines phenolischen Antioxidans.

Tabelle VI

| Dehydrochlorierungstest bei 200°C | | | | | |
|---|---|---|---|---|---|
| **Mischung** | **16** | **17** | **18** | **19** | **20** |
| PVC K-Wert 70 | 100 | 100 | 100 | 100 | 100 |
| DIDP[1)]-Weichmacher | 47 | 47 | 47 | 47 | 47 |
| LOXIOL G71 S[10)] | 0.5 | 0,5 | 0,5 | 0,5 | 0,5 |
| $NaClO_4$ | 0,07 | 0,07 | 0,07 | 0,07 | 0,07 |
| Zn-Stearat | 0,05 | 0,05 | 0,05 | 0,05 | 0,05 |
| Rhodiastab 50[9)] | 0,2 | 0,2 | 0,2 | 0,2 | 0,2 |
| BisphenolA | | | | 0,3 | 0,3 |
| epox. Soja-Öl | 3,0 | | | | |
| Araldit GY 250[2)] | | 3,0 | | 3,0 | |
| Araldit PT 810[15)] | | | 3,0 | | 3,0 |
| **Minuten** | **15** | **32.5** | **41** | **51.5** | **46,5** |

1)Di-iso-dodecylphthalat
2)Bisphenol-A-diglycidylether (Araldit® GY 250)
9)Stearoylbenzoylmethan
10)Polyethylenwachs
15) festes heterocyclisches Epoxidharz (Triglycidylisocyanurat)

Hier zeigt sich a) der positive Effekt von Bisphenol A und b) die Überlegenheit der erfindungsgemäßen Mischung gegenüber der entsprechenden mit epoxidiertem Sojabohnenöl.

Tabelle VII

| Dauerwalztest | | | |
|---|---|---|---|
| **Mischung** | **16** | **17** | **18** |
| PVC K-Wert 70 | 100 | 100 | 100 |
| DIDP[1)]-Weichmacher | 47 | 47 | 47 |
| LOXIOL G71 S[10)] | 0.5 | 0,5 | 0,5 |
| $NaClO_4$ | 0,07 | 0,07 | 0,07 |
| Zn-Stearat | 0,05 | 0,05 | 0,05 |
| Rhodiastab 50[9)] | 0,2 | 0,2 | 0,2 |
| epox. Soja-Öl | 3,0 | | |
| Araldit GY 250[2)] | | 3,0 | |
| Araldit PT 810[15)] | | | 3,0 |
| **YI nach 5 Minuten** | **22** | **6** | **7** |
| **YI nach 10 Minuten** | **59** | **8** | **9** |
| **YI nach 15 Minuten** | **102** | **11** | **11** |

1)Di-iso-dodecylphthalat
2)Bisphenol-A-diglycidylether (Araldit® GY 250)
9)Stearoylbenzoylmethan
10) Polyethylenwachs
15) festes heterocyclisches Epoxidharz (Triglycidylisocyanurat)

Auch in diesem Test sind die Mischungen 17 und 18 derjenigen mit epoxidiertem Sojabohnenöl überlegen.

## Patentansprüche

**1.** Zusammensetzung enthaltend

(a) Weich-PVC,
(b) 0,001-5,0 Teile je 100 Teile PVC Perchlorat der Formel $M(ClO_4)_n$, wobei M H, $NH_4$, Na, K, Mg, Ca, Ba oder Al und n 1, 2 oder 3 je nach Wertigkeit von M ist,
(c) 0,1-5,0 Teile je 100 Teile PVC einer Epoxidverbindung enthaltend einen endständigen Epoxidrest der Formel I

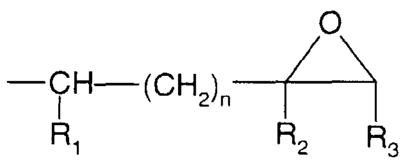

(I),

wobei

$R_1$ und $R_3$ Wasserstoff sind,
$R_2$ Wasserstoff oder Methyl und n gleich 0 ist, oder
$R_1$ und $R_3$ zusammen $-CH_2-CH_2-$ oder $-CH_2-CH_2-CH_2-$ und $R_2$ Wasserstoff sind und
n 0 oder 1 ist und das Epoxidradikal direkt an ein Kohlenstoff- Sauerstoff-, Stickstoff- oder Schwefelatom gebunden ist.

**2.** Zusammensetzung gemäß Anspruch **1**, worin M Na oder K ist.

**3.** Zusammensetzung gemäß Anspruch **1**, enthaltend als Komponente (c) eine Epoxidverbindung mit einer aromatischen Gruppe, insbesondere ein Bisphenolderivat.

**4.** Zusammensetzung gemäß Anspruch **1**, enthaltend zusätzlich Stoffe ausgewählt aus der Gruppe der Füllstoffe und Verstärkungsmittel, Antioxidantien, Polyole, Zeolithe, Hydrotalcite, Dawsonite, organischen Phosphite, 1,3-Diketoverbindungen, Dihydropyridine, sterisch gehinderten Amine (HALS), Lichtschutzmittel, UV-Absorber, Gleitmittel, Fettsäureester, Paraffine, Treibmittel, optischen Aufheller, Pigmente, Flammschutzmittel, Antistatika, β-Aminocrotonate, Pyrrole, β-Naphthole, Hydroxydiphenylamine, Phenylindole, Phosphate, Thiophosphate, Gelierhilfen, peroxidzerstörenden Verbindungen, Modifikatoren und weiteren Komplexbildner für Lewis-Säuren.

**5.** Zusammensetzung gemäß Anspruch **1**, enthaltend zusätzlich ein phenolisches Antioxidants.

**6.** Zusammensetzung gemäß Anspruch **1**, enthaltend zusätzlich Füllstoffe, insbesondere Kreide.

**7.** Zusammensetzung gemäß Anspruch **6**, enthaltend zusätzlich eine oder mehrere Metallseifen.

**8.** Zusammensetzung gemäß Anspruch **1**, enthaltend zusätzlich mindestens ein Additiv aus der Gruppe der Disaccharidalkohole, organischen Phosphite, Zeolithe, Hydrotalcite, Dawsonite, Aminocrotonate, Polyole, Diketone, Pyrrole, β-Naphthole oder Dihydropyridine.

**9.** Zusammensetzung gemäß Anspruch **1**, enthaltend zusätzlich mindestens ein Additiv aus der Gruppe der organischen Phosphite, Zeolithe, Dawsonite und Hydrotalcite.

**10.** Verwendung eines Perchlorates oder von Perchlorsäure in Kombination mit einer endständigen Epoxidverbindung gemäss Anspruch **1** zum Stabilisieren von Weich-PVC.

**11.** Verfahren zur Herstellung von stabilisiertem Weich-PVC, dadurch gekennzeichnet, daß man unter Verwendung von Vorrichtungen, wie Kalander, Mischer, Kneter, Extruder und dergleichen, die Komponenten (b) und(c) gemäß Anspruch 1 und gegebenenfalls weitere Zusätze mit dem PVC vermischt.

**12.** Verwendung des stabilisierten Weich-PVC gemäß Anspruch **1** zur Herstellung von aus Weich-PVC herstellbaren Formkörpern.

**13.** Verwendung gemäß Anspruch **12** zur Herstellung von Drahtummantelungen, Kabelisolierungen, Dekorationsfolien, Schaumstoffen, Agrarfolien, Schläuchen, Dichtungsprofilen und Bürofolien.

## Claims

**1.** A composition comprising

(a) flexible PVC,
(b) 0.001-5.0 parts, per 100 parts of PVC, of perchlorate of the formula $M(ClO_4)_n$, where M is H, $NH_4$, Na, K, Mg, Ca, Ba or Al and n is 1, 2 or 3, depending on the valency of M,
(c) 0.1-5.0 parts, per 100 parts of PVC, of an epoxide compound containing a terminal epoxide radical of the formula I

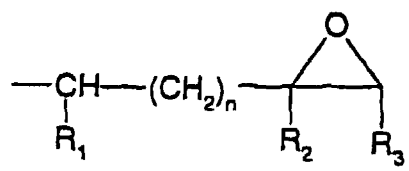 (I),

where

$R_1$ and $R_3$ are hydrogen,
$R_2$ is hydrogen or methyl and n is 0, or
$R_1$ and $R_3$ together are $-CH_2-CH_2-$ or $-CH_2-CH_2-CH_2-$ and $R_2$ is hydrogen and n is 0 or 1 and the epoxide radical is bonded directly to a carbon, oxygen, nitrogen or sulfur atom.

**2.** A composition according to claim **1**, wherein M is Na or K.

**3.** A composition according to claim **1**, wherein component (c) is an epoxide compound containing an aromatic group, in particular a bisphenol derivative.

**4.** A composition according to claim **1**, additionally comprising substances selected from the group consisting of fillers and reinforcing materials, antioxidants, polyols, zeolites, hydrotalcites, dawsonites, organic phosphites, 1,3-diketo compounds, dihydropyridines, sterically hindered amines (HALS), light stabilizers, UV absorbers, lubricants, fatty acid esters, paraffins, blowing agents, optical brighteners, pigments, flameproofing agents, antistatics, β-aminocrotonates, pyrroles, β-naphthols, hydroxydiphenylarnines, phenylindoles, phosphates, thiophosphates, gelling aids, peroxide-destroying compounds, modifiers and other complexing agents for Lewis acids.

**5.** A composition according to claim **1**, additionally comprising a phenolic antioxidant.

**6.** A composition according to claim **1**, additionally comprising fillers, in particular chalk.

**7.** A composition according to claim **6**, additionally comprising one or more metal soaps.

**8.** A composition according to claim **1**, additionally comprising at least one additive from the group consisting of disaccharide alcohols, organic phosphites, zeolites, hydrotalcites, dawsonites, aminocrotonates, polyols, diketones, pyrroles, β-naphthols and dihydropyridines.

**9.** A composition according to claim **1**, additionally comprising at least one additive from the group consisting of organic phosphites, zeolites, dawsonites and hydrotalcites.

**10.** The use of a perchlorate or perchloric acid in combination with a terminal epoxide compound according to claim **1** for stabilizing flexible PVC.

**11.** A process for the preparation of stabilized flexible PVC, which comprises mixing components (b) and (c) according to claim **1** and, if desired, further additives with the PVC using equipment such as calenders, mixers, compounders, extruders and the like.

**12.** The use of stabilized flexible PVC according to claim **1** for the production of mouldings which can be produced from flexible PVC.

**13.** The use according to claim **12** for the production of wire sheaths, cable insulation, decoration sheeting, foams, agricultural sheeting, tubes, sealing profiles and office films.

## Revendications

**1.** Composition contenant

(a) du PVC souple;
(b) 0,001-5,0 parties de perchlorate de formule $M(ClO_4)_n$ pour chaque fois 100 parties de PVC, dans laquelle M est H, $NH_4$, Na, K, Mg, Ca, Ba ou Al et n est 1, 2 ou 3 suivant la valence de M;
(c) 0,1-5,0 parties d'un composé époxydé contenant en fin de chaîne un radical époxyde de formule I, pour chaque fois 100 parties de PVC

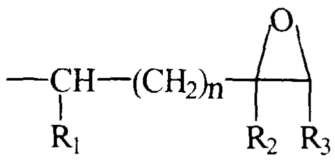

(I)

dans laquelle

$R_1$ et $R_3$ sont hydrogène,
$R_2$ est hydrogène ou méthyle et n est égal à 0, ou $R_1$ et $R_3$ sont ensemble $-CH_2-CH_2-$ ou $-CH_2-CH_2-CH_2-$ et $R_2$ est hydrogène et n est 0 ou 1 et le radical époxyde est directement lié à un atome de carbone, d'oxygène, d'azote ou de soufre.

**2.** Composition suivant la revendication 1, dans laquelle M est Na ou K.

**3.** Composition suivant la revendication 1, contenant comme composants (c) un composé époxydé avec un groupement aromatique, en particulier un dérivé de bisphénol.

**4.** Composition suivant la revendication 1, contenant en outre des substances choisies dans le groupe des charges et des agents de renforcement, des antioxydants, des polyols, des zéolithes, des hydrotalcites, des dawsonites, des phosphites organiques, des composés 1,3-dicéto, des dihydropyridines, des amines stériquement encombrées (HALS), des agents de protection contre la lumière, des absorbeurs d'UV, des lubrifiants, des esters d'acide gras, des paraffines, des agents moussants, des azurants optiques, des pigments, des agents antiflammes, des antistatiques, des β-aminocrotonates, des pyrroles, des β-naphtols, des hydroxydiphénylamines, des phénylindoles, des phosphates, des thiophosphates, des auxiliaires de gélification, des composés destructeurs de peroxyde, des modifiants et d'autres agents complexants pour acides de Lewis.

**5.** Composition suivant la revendication 1, contenant en outre un antioxydant phénolique.

**6.** Composition suivant la revendication 1, contenant en outre des charges, en particulier de la craie.

**7.** Composition suivant la revendication 6, contenant en outre un ou plusieurs savons métalliques.

**8.** Composition suivant la revendication 1, contenant en outre au moins un additif du groupe des alcools de disaccharide, des phosphites organiques, des zéolithes, des hydrotalcites, des dawsonites, des aminocrotonates, des polyols, des dicétones, des pyrroles, des β-naphtols ou des dihydropyridines.

**9.** Composition suivant la revendication 1, contenant en outre au moins un additif du groupe des phosphites organiques, des zéolithes, des dawsonites et des hydrotalcites.

**10.** Utilisation d'un perchlorate ou d'acide perchlorique en combinaison avec un composé époxydé en fin de chaîne suivant la revendication 1 pour la stabilisation de PVC souple.

**11.** Procédé de préparation de PVC souple stabilisé, caractérisé en ce que l'on mélange les composants (b) et (c) suivant la revendication 1 et, le cas échéant, d'autres additifs avec le PVC, en utilisant des dispositifs comme une calandre, un mélangeur, un malaxeur, une extrudeuse et des appareils semblables.

**12.** Utilisation du PVC souple stabilisé suivant la revendication 1, pour la préparation de corps moulés pouvant être préparés à partir de PVC souple.

**13.** Utilisation suivant la revendication 12, pour la fabrication de gaines de fils, d'isolations de câbles, de feuilles de décoration, de matières moussantes, de feuilles pour l'agriculture, de tuyaux, de profils d'étanchéité et de feuilles pour bureau.